# EUROPEAN PATENT SPECIFICATION

(11) **EP 1 824 342 B1**
(45) Date of publication and mention of the grant of the patent: **27.07.2011**
(21) Application number: 05815451.9
(22) Date of filing: 09.12.2005
(51) Int. Cl.: A21D 2/18, A21D 10/00

(54) **USE OF A POLYSACCHARIDE AS BREAD IMPROVER**
VERWENDUNG VON POLYSACCHARIDE ALS BROTVERBESSERUNGSMITTEL
EMPLOI D'UNE POLISACCARIDE POUR AMÉLIORER UN PAIN

(30) Priority: 10.12.2004 EP 04078351
(43) Date of publication of application: 29.08.2007
(73) Proprietor: Nederlandse Organisatie voor Toegepast -Natuurwetenschappelijk Onderzoek TNO, 2628 VK Delft (NL)
(72) Inventor: VAN GEEL-SCHUTTEN, Gerritdina, Hendrika, NL-3971 XG Driebergen (NL); HEDDES, Cornelius, Egidius, Antonius, NL-6673 AL Andelst (NL); NOORT, Martijn, Willem-Jan, NL-1221 KK Hilversum (NL); KATS, Mark, Paul, NL-3972 ZE Driebergen (NL); JURGENS, Albertus, NL-3461 GJ Linschoten (NL); PLIJTER, Johanna, NL-3921 BA Elst (NL)
(74) Representative: Swinkels, Bart Willem
(86) International application number: PCT/NL2005/050071
(87) International publication number: WO 2006/062410

(56) References cited:
- WO-A-03/008618
- WO-A-2004/013343
- WO-A-2004/022076
- US-B1- 6 486 314
- TIEKING,KORAKLI,EHRMANN,GÄNZLE,VOGEL: "In Situ Production of Exopolysaccharides during sourdough fermentation by cereal and intestinal isolates of lactic acid bacteria" APPLIED AND ENVIRONMENTAL MICROBIOLOGY, vol. 69, no. 2, February 2003 (2003-02), pages 945-952, XP008047297
- DE VUYST, DEGEEST: "Heteropolysaccharides from lactic acid bacteria" FEMS MICROBIOLOGY REVIEWS, vol. 23, 1999, pages 153-177, XP000971896

## Description

The present invention is in the field of bakery products. The invention is particularly concerned with the use of certain high molecular weight polysaccharides as an anti-staling agent and for improving volume, taste and texture of bakery products. The invention is furthermore concerned with bread-improving compositions, doughs and bakery products containing these polysaccharides. In bakery products, also the softness of the crumb, the taste and the texture are improved and the rate of staling is reduced, thus improving both the quality and the shelf-life of the product.

### Background of the invention

EP-A 790003 describes the use of dextrans (α-1,6-glucans) from *Leuconostoc mesenteroides* (Lm) for improving structure build-up in baked products such as Belgian pistolets. Good results are obtained with a dextran of a particular Lm strain (denoted as P171) having a degree of α-1,3 linking of 4.6%, the remainder being α-1,6 linking, and being essentially non-branched, whereas poor results are obtained when using the dextran of another Lm strain (denoted as B512F), which has a slightly higher degree of α-1,3 linking of 5.9%. Polysaccharides having a degree of branching higher than 5% are said to be less effective as bread improvers. In order to be suitable for improving structure, the dextran described in EP 790003 should yield a sufficient viscosity rise: a 1% aqueous solution should exhibit a viscosity increase of more than 0.4x10⁻³ Pas after 5000 seconds at a stress of 0.5 Pa.

Tieking et al. (Appl. Environm. Microbiol. 69 (2003), 945-952) describe in situ production of exopolysaccharides during sourdough preparation by lactobacilli and discuss the possible role of the lactobacilli as bread additives. WO2004/013343 describes a combination of exopolysaccharides with a lactic acid micro-organism and an enzyme produced by said micro-organism, in which the exopolysaccharides are formed in situ, for modifying a wide range of properties in a large variety of food products, including biscuits, cakes and cake mixes.

The object of the invention is to provide a bread improver enabling the preparation of bakery products exhibiting improved product characteristics such as specific volume, shelflife, taste and texture.

### Description of the invention

It was found that the volume, taste and texture of a leavened bakery product based on flour can be improved by using, as a bakery ingredient, a polysaccharide which is characterised by a molecular weight of at least 10⁴ Dalton, an anhydroglucose content of at least 80% , a branching percentage of at least 6%, an α-1,6-linked anhydroglucose content of 5-70%, an α-1,4-linked anhydroglucose content of 15-70% or an α-1,3-linked anhydroglucose content of 10-60%. Also, staling behaviour can be improved by using this ingredient. Thus, the invention is concerned with the use of such a polysaccharide in improving the structure of a bakery product, including its volume, and is further concerned with a bread improver composition, a dough, and a bakery product containing such a polysaccharide.

The polysaccharide to be used according to the invention should have a minimum branching percentage of 6%, preferably at least 7%, more preferably at least 8%, most preferably at least 10%. The branching percentage may be as high as e.g. 30%, although percentages higher than 24% do not have additional advantages, the preferred upper level being 20%. The branching percentage of the polysaccharide, which can also be referred to as degree of branching, is defined as the proportion of branching units, i.e. anhydroglycose (monose) units being linked to three neighbouring anhydroglycose units. The branching percentage, i.e. the proportion of branching units, can be calculated by known methods including spectroscopic methods such as ¹H-NMR or ¹³C-NMR spectroscopy and/or chromatographic methods either on the polysaccharide as such or after selective hydrolysis using iso-amylase followed by a coulometric titration with iodine, or after chemical preparation such as methylation followed by hydrolysis (see e.g. Van Geel-Schutten, et al., Appl. Environ. Microbiol. (1999) 65, 3008-3014). Mixtures of highly branched polysaccharides and polysaccharides having a lower degree of branching (e.g. between 3 and 6 %) can also be used, while it is preferred that the average degree of branching of the mixture is above 6%.

The remainder of the anhydroglycose units are either chain units, i.e. units linked to two neighbouring units, or terminal units, i.e. units linked to a single neighbouring unit. Generally 44-88%, in particular 60-84% of the anhydroglycose units are chain units and 6-30%, in particular 8-24% are terminal units. In the polysaccharide, the proportion of branching units is close to the proportion of terminal units, as the total number of terminal units will normally equal the number of branching units plus two, and for high-molecular polysaccharides these numbers will practically become equal. Thus, the degree of branching can also be estimated as the percentage of branching units plus the percentage of terminal units, divided by two.

For the purpose of the invention, branching is understood to cover all polysaccharides having a substantial proportion of at least two different linking types, for example α-1,4 and α-1,6 linkages, or α-1,3 and α-1,6 linkages, even if they are not branched in the strict sense, i.e. having a substantial level of monose units linked to three neighbouring units. For such varied polysaccharides, the minimum level of each type of linking is 6% preferably 10%, more preferably 20%, with an obvious upper limit of 50%. Examples of such varied polysaccharides are pullulan (poly(Glc-1α→4-Glc-1α→4-Glc-1α→6) from *Aureobasidium pullulans*) and elsinan (poly(Glc-1α→4-Glc-1α→4-Glc-1α→3) with some 1,3,6-branches from *Elsinoe leucospila*).

The polysaccharide is in particular a glucan, i.e. comprising at least 80%, more preferably at least 90%, most preferably at least 96% of anhydroglucose units, calculated on the total number of anhydroglycose (any monose) units. Thus, the polysaccharide can essentially be a homopolysaccharide. Preferably, the glucan is an α-glucan, i.e. having the majority of anhydroglucose units linked through their α-anomeric position. The remainder of the units, if any, can e.g. be of the type of β-linked glucose, mannose, rhamnose, galactose, fructose or the like. The presence of low levels of non-saccharidic residues, such as lipid (lipopolysaccharides), peptidic (proteo-glycans) or other residues, is not preferred, but is not detrimental up to a level of about 20% (by weight of the total average molecule).

In the α-glucan, the proportion of 1,6-linked units should not exceed 80%, i.e. the glucan is not a dextran-type glucan. The polysaccharide has an α-1,6-linked anhydroglucose content of 5-70%, more preferably of 15-50%. The remainder of the α-linked units may be 1,2-, 1,3- and/or 1,4-linked units. Glucans having a substantial proportion of α-1,4-units were found to be very suitable. Thus the polysaccharide has also an α-1,4-linked anhydroglucose content of 15-70%, especially of 25-60%. The polysaccharide has also an α-1,3-linked anhydroglucose content of 10-60%, especially of 15-40%.

Although it is preferred that the polysaccharide is not chemically modified, minor levels of substitution, e.g. by carboxyl, alkyl (such as methyl), hydroxyalkyl (such as hydroxyethyl), acyl (such as acetyl), phosphate, sulphate may be present, e.g. up to an average degree of substitution of 0.2, in particular not exceeding a degree of substitution of 0.1 (substituent per anhydroglycose unit).

It is preferred that the polysaccharide of the present invention does not show a high rise in viscosity during shear in aqueous solution or dispersion. It is also preferred that the polysaccharide is relatively water-soluble. The molecular weight of the polysaccharide is above 10⁴ Da, preferably above 10⁵ Da, and most preferably above 10⁶ Da, up to e.g. 10⁸. The polysaccharide has a relatively compact configuration. The compactness is demonstrated by the radius of giration (Rg), which is preferably lower than 75 nm, and especially below 50 nm.

The polysaccharide can be of any origin, such as plants, animals, micro-organisms, and it can even be a (semi)synthetic product. However, it is preferred that the polysaccharide is derived from a non-pathogenic organism, in particular a non-pathogenic, especially food-grade micro-organism, such as food-grade bacteria, yeasts and fungi. Suitable micro-organisms are lactic acid bacteria and related bacteria, including the genera *Lactobacillus, Leuconostoc, Lactococcus, Pediococcus, Propionibacterium* and the like. Especially preferred are *Lactobacillus* strains, for example *Lb. reuteri, Lb. plantarum, Lb. fermentum, Lb. parabuchneri* and *Lb. sakei.*

The polysaccharides can be produced by (micro)organisms in a known way, e.g. by feeding the micro-organism a suitable carbohydrate source, such as sucrose, maltose, glucose, lactose, raffinose, etc., depending on the particular strain. The polysaccharides are usually excreted by the micro-organism and can then simply be separated, if necessary, from the culture medium or production medium and the cells by conventional means such as centrifugation, filtration, concentration, chromatography, etc.. The polysaccharides thus recovered may be fractionated where appropriate to remove short-chain analogues. Alternatively, the polysaccharides may be used as such, or with (a part of) the production medium, or even together with the producing micro-organisms. The polysaccharides may also be produced *de novo* by resting cells or by using isolated or immobilised glucan-producing enzymes (glucosyltransferases). The polysaccharides could even be produced in situ by the micro-organisms added to the dough, although this is generally not preferred because of the necessity to add sugar as a source of the exopolysaccharides.

Alternatively, the highly branched polysaccharides can be derived by modification of commonly available glucans - like starch, amylopectin, glycogen, pullulan or alternan - having a low degree of branching, using suitable micro-organisms or branching enzymes (EC 2.4.1.18) capable of producing the desired degree of branching. Examples of suitable branching enzymes are α(1,4)-D-glucan: α(1,4)-glucan 6-glycosyltransferases and α(1,4)-D-glucan: orthophosphate α-glycosyltransferases (EC 2.4.1.1).

It is also possible to produce the highly branched glucans by *de novo* synthesis from glucose or (phosphorylated) glucose derivatives using a combination of a glucan-synthesising enzyme and a branching enzyme, or by synthesis from sucrose using a combination of an amylosucrase and a branching enzyme. As an example, highly branched α(1,4)(1,6)-glucans can be obtained from sucrose by the combined action of an amylosucrase and an α(1,4)-D-glucan: α(1,4)-glucan 6-glycosyltransferase, optionally expressed in modified crops. A degree of branching up to 35% can be obtained as described in EP-A-1117802 (WO 00/22140, PlantTec).

The polysaccharides to be used according to the invention preferably have a reduced digestibility, i.e. increased resistance to degradation by intestinal enzymes, compared to e.g. starch. Preferably, the digestibility (expressed as percentage glucose release in jejunum and ileum e.g. using the Englyst method: Englyst, H.N. et al, Am. J. Clin. Nutr. 1999, 69, 448-454 and Englyst, H.N. et al. Eur. J. Clin. Nutr. (1992) 46, S33 - S50, or using the TNO gastro-intestinal model for the small intestine: Minekus et al, Alternatives to Laboratory Animals (ATLA) 23: 197-209) is less than 30% compared to native starch. Thus, the polysaccharides have nutritional the characteristics or slowly digestible carbohydrate (slow carb) or of fibre.

An example of a suitable polysaccharide for use according to the invention is reuteran, a branched α-1,4/1,6-glucan produced by some *Lactobacillus reuteri* strains such as strain LB 121 (see: van Geel-Schutten, G.H. et al., Appl. Microbiol. Biotechnol. (1998) 50, 697-703). This glucan has a molecular weight of about 3,5 MDa and is highly branched with a structure consisting of a terminal, 4-substituted, 6-substituted, and 4,6-di-substituted α-glucose in a molar ratio 1.1 : 2.7 : 1.5 : 1.0. The glucan and the enzyme producing it are described in WO 01/90372. Other examples of suitable polysaccharides, including an α-1,3/1,6 glucan produced by *L. reuteri* strain 180 was deposited as LMG P-18389 at the BCCM/LMG, are described in WO 03/008618.

A bread improver composition according to the invention typically contains at least 1 wt.% of a polysaccharide as defined above, in particular between 3 and 30 wt.%, and at least one component selected from the group of lipids, emulsifiers, enzymes, oxidising agents, flour, salt, sugar and hydrocolloids. Examples of lipids include triglycerides and phospholipids, such as soybean oil or soybean lecithin (e.g. in an amount of 0.1 % to 10% based on the improver weight). Typical examples of emulsifiers include monoglycerides, diglycerides and esters of these glycerides and acids such as monoglyceride lactate (Lactem®) or monoglyceride diacetyltartrate (Datem®) (e.g. in an amount of 0.1 - 5 wt.%).

The bread improver composition may suitably contain enzymes commonly used to improve the quality of bakery products or to facilitate manufacture of bakery products, such as proteolytic and amylolytic enzymes (e.g. alpha- and beta-amylase, endo-xylanases, protease, e.g. in a total amount of enzymes of 0.1 - 1 wt.% of the bread improver composition). Chemical agents such as oxidising and reducing agents (e.g. in a total amount of 0.5 - 5 wt%) and optionally other water-binding components like hydrocolloids (e.g. pectin, gelatine, carboxymethyl cellulose, carrageenan, guar or locust bean gums, etc, for example in an amount of 0.5 - 10 wt.% of the improver composition) can also advantageously be incorporated in the present bread improver composition.

Combinations of the polysaccharide defined above with an α-amylase, especially a thermostable α-amylase, and optionally emulsifiers, are particularly advantageous. As the polysaccharides were found to have a different mechanism from the crystallisation-inhibiting effect on bread improving and anti-staling amylopectin exerted by the enzymes and emulsifiers, a cumulated or even synergetic effect will result. Weight ratios of 500:1 to 20:1 of polysaccharide to enzyme, and/or weight ratios of 100:1 1 to 1:1 of polysaccharide to emulsifier can e.g. be used.

Another aspect of the invention relates to a dough for producing a bakery product containing the polysaccharide in an amount of between 0.1 and 20 wt.%, especially between 1 and 10 wt.%, in addition to flour and further usual ingredients.

Leavened bakery products are most commonly prepared by mixing flour, water and leavening agent, followed by kneading, shaping, leavening and baking. The polysaccharide of the present invention may be added during the initial stages of mixing or it can be added at a later stage during dough preparation. In order to ensure homogeneous distribution of the polysaccharide throughout the dough, it is advantageous to premix the polysaccharide with one or more particulate dough ingredients, e.g. flour, salt, sugar or hydrocolloids. Preferably, the polysaccharide is premixed with the flour before being combined with water. Besides the basic ingredients mentioned here, additional ingredients can optionally be used. In common practice, a bread improver is used, containing an optimised mixture of functional ingredients and additives as described above. Furthermore, sucrose can be added as yeast substrate and as an ingredient to acquire certain product texture and taste. The polysaccharide is present in the baked product without structural changes, as it is not affected by fermentation or as a result of the baking process.

Leavened bakery products according to the present invention typically exhibit a specific volume of at least 1.4 ml/g, more preferably of at least 2.4 ml/g, most preferably between 2.8 and 6.0 ml/g.. Examples of leavened bakery products encompassed by the present invention include bread, puff pastry, confectionery, doughnuts. The benefits of the present invention become manifest in yeast-leavened bakery products as well as in bakery products that have been chemically leavened. Preferably, leavened bakery product is yeast leavened bakery product, especially yeast leavened bread (e.g. tin bread, rolls, baguette, croissant).

### EXAMPLES

### Example 1:

Bread dough was prepared as follows. All the dry ingredients (flour, polysaccharide, salt and dry yeast) were pre-mixed in the mixer bowl (of 30 °C) of a 10 gram Farinograph mixer on a Plastograaf (Brabender) with a rotational speed of 63 rpm. The estimated amount of distilled water (of 30°C), was brought on the (running) premixed dry ingredients. Kneading the mixture till the maximum consistency of about the Edelweiss provided a bread dough, 14.0 grams of which was rounded up and subsequently fermented for 45 minutes at 30°C in a rising cabinet. Then, the dough was scaled at a dough weigh, which contains 8 gram of flower/polysaccharide, followed by a second fermentation for 15 min. Thereafter, the dough was moulded and put in a greased baking pan and left to rise for another 60 minutes. Finally baking the fermented dough in a small scale vertically rotating oven at 225 °C for 20 minutes provided a miniature bread product. The volume of this bread was determined by measuring the volume of water replaced by the bread, which was coated with paraffin.

According to the procedure described above, nine doughs were prepared using the ingredients and their relative amounts as summarised in table I. Experiment 1 is a control dough (no fibre additive). As a test additive, two glucans according to the invention, reuteran (experiments 3 and 9) and an α-1,3/1,6-glucan (experiments 2 and 8), were used and compared to conventional fibres as they are used to increase the dietary fibre content of foods: inulin (experiments 4-6) and wheat fibre (experiment 7). The results show that the additives according to the invention lead to a substantial increase in volume, whereas the known fibres result in a decreased volume.

**Table 1: Composition, processing and baking results of dough containing additive**

| *Experiment nr* | *1* | *2* | *3* | *4* | *5* | *6* | *7* | *8* | *9* |
|---|---|---|---|---|---|---|---|---|---|
| Flour Edelweiss | 10 | 9 | 9 | 9 | 9 | 9 | 9 | 9.8 | 9.8 |
| EPS 180 (1) | | 1 | | | | | | 0.2 | |
| EPS 35-5 (2) | | | 1 | | | | | | 0.2 |
| Raftiline HP (3) | | | | 1 | 1 | 1 | | | |
| Vitacel WF 200 (4) | | | | | | | 1 | | |
| Salt | 0.2 | 0.2 | 0.2 | 0.2 | 0.2 | 0.2 | 0.2 | 0.2 | 0.2 |
| Dried yeast | 0.17 | 0.17 | 0.17 | 0.17 | 0.17 | 0.17 | 0.17 | 0.17 | 0.17 |
| Water | 5.81 | 6.5 | 6.5 | 6.5 | 5.8 | 5.5 | 6.5 | 5.94 | 5.94 |
| Dough weight | 12.9 | 13.4 | 13.4 | 13.4 | 12.9 | 11.8 | 13.4 | 13.0 | 13.0 |
| Kneading time (min) | 4.7 | 8.0 | 8.0 | 8.0 | 15.0 | 15.0 | 8.5 | 7.0 | 8.5 |
| Kneading energy (FU) | | | | | | | | | |
| | 520 | 680 | 630 | 630 | 450 | 510 | 500 | 520 | 520 |

| *Results* | | | | | | | | | |
|---|---|---|---|---|---|---|---|---|---|
| Texture | good | sticky | sticky | np (5) | sticky | sticky | good | good | good |
| Weight before paraffin | 9.03 | 9.66 | 9.4 | | 9.38 | 8.82 | 10.12 | 9.4 | 9.32 |
| Weight after paraffin | 10.02 | 10.81 | 10.64 | | 10.36 | 9.68 | 10.98 | 10.43 | 10.49 |
| Paraffin weight | 0.99 | 1.15 | 1.24 | | 0.98 | 0.86 | 0.86 | 1.03 | 1.17 |
| Paraffin volume | 0.94 | 1.09 | 1.18 | | 0.93 | 0.82 | 0.82 | 0.98 | 1.11 |
| Volume with paraffin | 35.5 | 36.01 | 49.1 | | 32.3 | 26.2 | 20.13 | 40.64 | 40.85 |
| Volume without paraffin | 34.56 | 34.92 | 47.92 | | 31.37 | 25.38 | 19.31 | 39.66 | 39.74 |
| SV loaf | 3.83 | 3.61 | 5.10 | np (5) | 3.34 | 2.88 | 1.91 | 4.22 | 4.26 |
| Volume in % with respect to 1 | 100 | 94.4 | 133.2 | | 87.4 | 75.2 | 49.9 | 110.2 | 111.4 |

| | | | | | | | | | |
|---|---|---|---|---|---|---|---|---|---|
| (1) α-1,3/1,6-glucan from *Lb. reuteri* strain Lb 180, degree of branching about 12% (2) α-1,4/1,6-glucan (reuteran) from *Lb. reuteri* strain Lb 35-5, degree of branching about 16% (3) inulin having from chicory (Orafti), average DP > 23 (MW > 3.7 kDa), degree of branching < 5% (4) wheat fibre (5) not processable | | | | | | | | | |

### Example 2:

### Farinograph:

Farinograph mixing experiments were performed using the following procedure: The dry ingredients (flour, polysaccharide and salt) were pre-mixed in the mixer bowl (of 30 °C) of a 10 gram Farinograph mixer on a Plastograph (Brabender) with a rotational speed of 63 rpm. The desired amount of distilled water (of 30°C), was brought on the (running) premixed dry ingredients. The dough was mixed and a graph was produced indicating the torque of the mixer against the mixing time. The formulation used is given in Table 2 and the added polysaccharides are given in Table 3. Mixing experiments were performed using a reference without addition and all polysaccharides were added at 2% w/w on flour weight. The results of the mixing experiments are summarised in Table 4: the dough development time (DDT) is given in minutes relative to the blank (9.0 minutes; without added polysaccharides); negative values mean shorter mixing times, and thus a favourable result; the maximum dough consistency is given in percentage increase or decrease relative to the blank; positive values mean higher consistency and thus a favourable result.

**Table 2: Formulation of bread dough**

| ***Ingredient*** | ***Type, origin*** | ***Amount (% on flour)*** | ***Amount (gram)*** |
|---|---|---|---|
| Flour | Edelweiss, Meneba | 100.0 | 10.00 |
| Polysaccharide | See Table 3 | 1.0 / 2.0 / 5.0 | 0.10 / 0.20 / 0.50 |
| Water | Demi water | 57.6 | 5.76 |
| Instant yeast | Fermipan red, DSM | 1.7 | 0.17 |
| Consumption salt | Without iodine, Akzo Nobel | 2.0 | 0.20 |

**Table 3: Polysaccharides added to the bread dough.**

| ***Sample*** | ***Description*** |
|---|---|
| EPS 180 | α-1,6/1,3-glucan from Lb. reuteri strain Lb 180, degree of branching about 12% |
| EPS 35-5 | α-1,4/1,6-glucan (reuteran) from Lb. reuteri strain Lb 35-5, degree of branching about 16% |
| HEPS 35-5 | EPS 35-5 hydrolysed to an average Mw of 33,700 |
| Levan | β-2,6-fructan, max 5% branching. Mw about 500,000 |
| ML1 | α-1,3/1,6-glucan from Lb. reuteri strain Lb ML1, degree of branching about 20% |
| LB33 | α-1,6/1,3-glucan from Lb. reuteri strain Lb 33, degree of branching 5-8% |
| BG91R | α-1,4/1,6-glucan derived from waxy potato starch. Degree of branching about 9%, Mw about 130 kDa |
| BG56A | α-1,4/1,6-glucan derived from waxy potato starch. Degree of branching about 5.6%, Mw about 130 kDa. |
| AMAZ | Amylomaltase treated potato starch. Degree of branching 3.3%. |

### Mini bread baking test:

The formulation used is already shown in Table 2 and 3. In the bread baking test the polysaccharide addition was varied; 1, 2 and 5% w/w on flour weight was added. Bread dough was prepared dosing the appropriate amount of water (28°C, corrected for the water absorption of the flour and polysaccharide mixture) in a mixing bowl of a 10 gram pen mixer (Mixograph, National Mfg). The rest of the ingredients (flour, polysaccharide, salt and dry yeast) were pre-mixed in a sample cup and were added to the water. Kneading the mixture for 5 minutes provided bread dough, which was rounded up and fermented for 45 minutes at 30°C in a closed rising cabinet (no controlled humidity). Thereafter, the dough was scaled to a total dough weight containing 8 gram of flour/polysaccharide. The dough was formed and a second fermentation time of 15 min was given. Then, the dough was moulded, put in a greased baking pan and left to rise for another 60 minutes. Finally, baking the fermented dough in a small scale vertically rotating oven at 210°C for 20 minutes provided a miniature bread product. The first 15 minutes of baking the tins were surrounded by a wet wooden mould to prevent excessive drying.

The volume of this bread was determined in duplicate by measuring the volume of water replaced by the bread (which was coated with paraffin). Table 4 summarises the effect of the polysaccharides on the bread specific volume per % polysaccharide added [d(SV)/d(c)]. Positive values mean a higher volume, and thus a desired effect.

**Table 4: Dough development time (DDT), maximum dough consistency of the farinograph mixing curve of doughs with addition of 2% polysaccharides and volume effect in mini bread of 1%, 2% and 5% added polysaccharide**

| Additions | MW (MDa) | Degree of branching (%) | DDT to (in min. relative to blank) | Consistency (in % relative to blank) | Volume effect d(SV)/d(c) |
|---|---|---|---|---|---|
| EPS 180 | 36 | 12 | - 2.5 | + 20 | + 0.07 |
| EPS 35-5 | 40 | 16 | - 3.0 | + 12 | + 0.14 |
| HEPS 35-5 | 0.03 | not det'd | + 6.0 | -10 | - 0.09 |
| Levan | 0.5 | ≤ 5 | + 1.0 | + 8 | + 0.02 |
| ML1 | 8 | 20 | - 1.5 | + 17 | - 0.03 |
| LB33 | 0.2 | 5-8 | - 0.9 | + 37 | - 0.15 |
| BG91R | 0.13 | 9 | + 2.5 | - 11 | + 0.06 |
| BG56A | 0.13 | 5.6 | + 2.4 | - 8 | - 0.02 |
| AMAZ | | 3.3 | - 1.5 | - 1 | - 0.06 |

### Example 3:

### Dough preparation large scale bread baking test

Dough was prepared according to the recipes shown in Table 5. Flour and all dry ingredients (temperature 5°C) were dry mixed in a Kemper SP15 spiral mixer for one minute at slow speed. The water (10°C) was added and mixed for 2 minutes at slow speed. The dough was subsequently kneaded at high speed until a dough temperature of 26°C was reached (approx. 6 minutes, total net energy input 30 kJ/kg dough).

**Table 5: Basic recipe for large scale bread in % on flour base**

| Ingredient | Blank | Reference | EPS 180 | EPS 35-5 |
|---|---|---|---|---|
| Flour | 100.0 | 100.0 | 100.0 | 100.0 |
| Water | 57.6 | 57.6 | 60.9 | 60.0 |
| Instant yeast | 1.7 | 1.7 | 1.7 | 1.7 |
| Consumption salt | 2.0 | 2.0 | 2.0 | 2.0 |
| Sugar | 0.5 | 0.5 | 0.5 | 0.5 |
| GMS | | 0.5 | | |
| Novamyl/α-amylase | | 20+20 ppm | | |
| EPS 180 | | | 3.0 | |
| EPS 35-5 | | | | 3.0 |

*800 g tin bread*

Dough pieces containing 575.3 gram flour were scaled, rounded by hand and left to rise at 30°C until 45 minutes after the start of kneading. The dough piece was moulded using a Mono bread moulder (settings 3.5/18), placed in bread tins and placed in a fermentation chamber of 30°C/95% R.H. The time of this final proofing period was determined using an SJA fermentograph measurement; for a ¼ dough piece the total CO₂-volume had to increase 600 ml (approximately 75 minutes). The set of baking tins was placed in a vertical rotating oven at 240°C and baked for 30 minutes.

The volume of the bread was measured 30 minutes after baking using seed displacement. After 24 hours storage a technical evaluation of the breads was performed. The colour of the crust and of the crumb, the shape of the product and coarseness and openness of the crumb structure were assessed. Also the flavour, taste and eating properties were evaluated sensorially.

### Rusk rolls

The remaining dough was rounded by hand and left to rise at 30°C for 15 minutes. The dough piece was flattened by hand, rounded and again left to rise at 30°C for 15 minutes. Then 15 pieces of 70 grams (+/- 0.5) were weighed and rounded by hand. The rolls were placed on a baking tray, flattened carefully by hand and rusk tins were placed upon them. A second baking tray was inverted on top of the tins to prevent the tins from lifting. The rolls were left to rise for about 65 minutes (500 ml SJA). The rusk rolls were baked in a Rototherm oven for 20 minutes at 215°C with 1.51 steam.

After 30 minutes cooling the rusk rolls were stored in plastic bags until evaluation of staling sensorially and by DSC.

Sensory evaluation of staling was determined by assessing the crumb hardness by hand. The rusk rolls were cut horizontally and compressed gently by hand. The scores should be interpreted comparatively. The evaluation was done after 1 hour, 1, 4 and 7 days. At these time points also DSC measurements were performed.

An overview of the effects of exopolysaccharides on the bread quality aspects is shown in Table 6. Most predominant effects were found in the crumb structure. The reference product containing an emulsifier provided very fine gas cells and thin walls. EPS-180 and to a larger extent EPS 35-5 caused a courser and more open cell structure. The reference with common anti-staling additives is most soft on hand as well as in eating properties. Although the exopolysaccharides gave less improvement on crumb softness, the eating properties are preferred over the reference additives.

**Table 6: Effect of exopolysaccharides on the bread quality aspects of 800 gram tin breads. Evaluation after 24 hours storage by bakery experts.**

| | Blank | Reference | EPS 180 | EPS 35-5 |
|---|---|---|---|---|
| Colour of the crust | 7 | 8 | 7 | 7½ |
| Shape | 7 | 8 | 7¼ | 6¾ |
| Colour of the crumb | 7 | 7½ | 6½ | 5 |
| Crumb structure | 7 | 8 | 6 | 5 |
| Crumb softness | 5 | 7½ | 7 | 6¼ |
| Flavour | Old bread | Strong old bread | Fresh acidulous | Stale acidulous |
| Taste | Old bread | Strong old bread | Fresh acidulous | Stale acidulous |
| Eating properties | 5 | 6½ | 7 | 6¾ |
| | (staled bread) | (very soft but doughy) | (soft) | (soft but firm) |

### Anti-staling effect

The rate of bread staling is measured in rusk rolls, as these products provide a homogeneous crumb structure and have a fixed volume. The rate of staling is measured in two ways; by DSC analysis and by assessing the crumb hardness by hand. The results of the evaluation of crumb hardness are shown in Table 7.

**Table 7: Crumb softness evaluated by hand (10 is very soft, 0 is very hard). Scores are given in quarter points for a small difference, a half point is a significant difference.**

| | 1 hr | 1 day | | 4 days | | 7 days | |
|---|---|---|---|---|---|---|---|
| Blank | 7 | 5 | 5 | 2 | 2 | 0¾ | 1 |
| reference | 8 | 7½ | 7½ | 4 | 4 | 2 | 1¾ |
| EPS 180 | 8½ | 7 | 7¼ | 4 | 3 | 1½ | 2 |
| EPS 35-5 | 8½ | 6½ | 7 | 3 | 4 | 1¼ | 1¼ |

The reference anti-staling additives show a much softer crumb during aging of the bread compared to the blank without additives. Compared to the reference the breads containing EPS have initially a softer crumb. During prolonged storage the breads with EPS are a little less soft. Comparing the two EPS varieties, EPS 180 results in a little bit softer crumb during aging.

The DSC measurements indicate that the addition of EPS 180 and EPS 35-5 does not lead to a significant difference in amylopectin crystallisation compared to the blank.

### Example 4:

Using the procedure of Example 4 mixing experiments and baking tests were carried out using the ingredients of Tables 8 and 9. The results on mixing time, consistency and volume effect are summarised in Table 9.

**Table 8: Formulation of bread dough**

| Ingredient | | Amount (% on flour) | Amount (gram) |
|---|---|---|---|
| Flour | Edelweiss, Meneba | 100 | 10.00 |
| Water | Demi water | 58.1 | 5.81 |
| Instant yeast | Fermipan red, DSM | 1.7 | 0.17 |
| Consumption salt | Without iodine, Akzo Nobel | 2 | 0.20 |

**Table 9: Overview of the (exo)polysaccharides added to the bread dough, partly replacing the flour.**

| Sample | Description | Relatiev mixing time at 2% | Consistency (rel. to blank) | Volume effect at 1%, 2%, 5% | | |
|---|---|---|---|---|---|---|
| PS 180 | As in ex. 1, 2 and 3 | - 0.1 | + 10% | +/- | +/- | - |
| EPS 35-5 | As in ex. 1, 2 and 3 | - 0.3 | + 8% | ++ | ++ | ++ |
| Poly dextrose | Litesse, Danisco (CBS 43971) | + 2.9 | - 8% | + | - | - |
| Dextran | Pharmacia T2000 (CBS 28761) | + 5.7 | + 1% | + | + | + |
| Pullulan | F36-g-45-75, NIKO PREP (CBS 39999) | + 1.8 | + 8% | - | + | + |
| Glycogen | Oyster, ICN (CBS 28600) | - 0.1 | + 1% | ++ | ++ | ++ |

## Claims

1. Use of a polysaccharide as a bakery ingredient for improving volume, texture, taste and/or staling properties of a leavened bakery product based on flour, the polysaccharide being **characterised by**:
- a molecular weight of at least 10⁴ Dalton,
- an anhydroglucose content of at least 80%,
- a branching percentage of at least 6%,
- an α-1,6-linked anhydroglucose content of 5-70%, and
- an α-1,4-linked anhydroglucose content of 15-70% or an α-1,3-linked anhydroglucose content of 10-60%.

2. Use according to claim 1, wherein the polysaccharide has a branching percentage of between 7 and 20%.

3. Use according to claim 1 or 2, wherein the polysaccharide has an α-1,6-linked anhydroglucose content of 15-50%.

4. Use according to any one of claims 1-3, wherein the polysaccharide has an α-1,4-linked anhydroglucose content of 25-60%, or an α-1,3-linked anhydroglucose content of 15-40%.

5. Use according to any one of claims 1-4, wherein the polysaccharide has a molecular weight of at least 10⁶ Da.

6. Use according to any one of claims 1-5, wherein the polysaccharide can be produced by a lactic acid bacterium, in particular a *Lactobacillus* strain.

7. Use according to claim 6, wherein the polysaccharide has been produced by a *Lactobacillus reuteri* strain.

8. A bread improver composition containing at least 1 wt.% of a polysaccharide as defined in any one of claims 1-7 and further containing at least one component selected from lipids, emulsifiers, enzymes, oxidising agents, flour, salt, sugar and hydrocolloids.

9. A bread improver according to claim 8, containing a weight ratio of 500:1 to 25:1 of polysaccharide to enzyme, and/or a weight ratio of 100:1 to 1:1 of polysaccharide to emulsifier.

10. A flour-based dough composition for producing a bakery product, containing at least 0.1% by weight of flour of a polysaccharide as defined in any one of claims 1-7.

11. A leavened bakery product based on flour, containing at least 0.1 % by weight of flour of a polysaccharide as defined in any one of claims 1-7.

## Patentansprüche

1. Verwendung eines Polysaccharids als Backinhaltsstoff zur Verbesserung von Volumen, Textur, Geschmack und/oder Alterungseigenschaften einer auf Mehl basierenden Backware mit zugesetztem Treibmittel, wobei das Polysaccharid **gekennzeichnet ist durch**:
- ein Molekulargewicht von mindestens 10⁴ Dalton,
- einen Gehalt an Anhydroglukose von mindestens 80%,
- einen Verzweigungsanteil von mindestens 6%,
- einen Gehalt an α-1,6-verknüpfter Anhydroglukose von 5-70%, und
- einen Gehalt an α-1,4-verknüpfter Anhydroglukose von 15-70% oder einen Gehalt an α-1,3-verknüpfter Anhydroglukose von 10-60%.

2. Verwendung nach Anspruch 1, wobei das Polysaccharid einen Verzweigungsanteil von zwischen 7 und 20% hat.

3. Verwendung nach Anspruch 1 oder 2, wobei das Polysaccharid einen Gehalt an α-1,6-verknüpfter Anhydroglukose von 15-50% hat.

4. Verwendung nach einem der Ansprüche 1-3, wobei das Polysaccharid einen Gehalt an α-1,4-verknüpfter Anhydroglukose von 25-60% oder einen Gehalt an α-1,3-verknüpfter Anhydroglukose von 15-40% hat.

5. Verwendung nach einem der Ansprüche 1-4, wobei das Polysaccharid ein Molekulargewicht von mindestens 10⁶ Da hat.

6. Verwendung nach einem der Ansprüche 1-5, wobei das Polysaccharid von einem Milchsäurebakterium hergestellt werden kann, insbesondere einem *Lactobacillus*-Stamm.

7. Verwendung nach Anspruch 6, wobei das Polysaccharid von einem *Lactobacillus* reuteri-Stamm hergestellt ist.

8. Brotverbesserungszusammensetzung, die mindestens 1 Gew.% eines in einem der Ansprüche 1-7 definierten Polysaccharids enthält und ferner mindestens eine Komponente ausgewählt aus Lipiden, Emulgatoren, Enzymen, Oxidationsmitteln, Mehl, Salz, Zucker und Hydrokolloiden enthält.

9. Brotverbesserer nach Anspruch 8, der ein Gewichtsverhältnis von 500:1 bis 25:1 von Polysaccharid zu Enzym und/oder ein Gewichtsverhältnis von 100:1 bis 1:1 von Polysaccharid zu Emulgator enthält.

10. Auf Mehl basierende Teigzusammensetzung für die Herstellung einer Backware, die mindestens 0,1 Gew.% eines in einem der Ansprüche 1-7 definierten Polysaccharids, bezogen auf das Mehlgewicht, enthält.

11. Auf Mehl basierende Backware mit zugesetztem Treibmittel, die mindestens 0,1 Gew.% eines in einem der Ansprüche 1-7 definierten Polysaccharids, bezogen auf das Mehlgewicht, enthält.

## Revendications

1. Utilisation d'un polysaccharide comme ingrédient de boulangerie, pour améliorer le volume, la texture, le goût et/ou les propriétés de rassissement d'un produit de boulangerie à pâte levée à base de farine, le polysaccharide étant **caractérisé par** :
- un poids moléculaire d'au moins 10⁴ Dalton,
- une teneur en anhydroglucose d'au moins 80 %,
- un pourcentage de ramification d'au moins 6 %,
- une teneur en anhydroglucose à liaison α-1,6 de 5 à 70 %, et
- une teneur en anhydroglucose à liaison α-1,4 de 15 à 70 % ou une teneur en anhydroglucose à liaison α-1,3 de 10 à 60 %.

2. Utilisation selon la revendication 1, dans laquelle le polysaccharide a un pourcentage de ramification entre 7 et 20 %.

3. Utilisation selon la revendication 1 ou 2, dans laquelle le polysaccharide a une teneur en anhydroglucose à liaison α-1,6 de 15 à 50 %.

4. Utilisation selon l'une quelconque des revendications 1 à 3, dans laquelle le polysaccharide a une teneur en anhydroglucose à liaison α-1,4 de 25 à 60 % ou une teneur en anhydroglucose à liaison α-1,3 de 15 à 40 %.

5. Utilisation selon l'une quelconque des revendications 1 à 4, dans laquelle le polysaccharide a un poids moléculaire d'au moins 10⁶ Dalton.

6. Utilisation selon l'une quelconque des revendications 1 à 5, dans laquelle le polysaccharide peut être produit par une bactérie lactique, en particulier une souche de *Lactobacillus.*

7. Utilisation selon la revendication 6, dans laquelle le polysaccharide a été produit par une souche de *Lactobacillus reuteri.*

8. Composition pour l'amélioration d'un pain, contenant au moins 1 % en poids d'un polysaccharide selon l'une quelconque des revendications 1 à 7 et contenant en outre au moins un composant choisi parmi les lipides, les émulsifiants, les enzymes, les agents oxydants, la farine, le sel, le sucre et les hydrocolloïdes.

9. Agent d'amélioration d'un pain selon la revendication 8, contenant un rapport en poids de 500:1 à 25:1 de polysaccharide à l'enzyme et/ou un rapport en poids de 100:1 à 1:1 de polysaccharide à l'émulsifiant.

10. Composition pour pâte à base de farine pour produire un produit de boulangerie, contenant au moins 0,1 % en poids de farine d'un polysaccharide selon l'une quelconque des revendications 1 à 7.

11. Produit de boulangerie à pâte levée à base de farine, contenant au moins 0,1 % en poids de farine d'un polysaccharide selon l'une quelconque des revendications 1 à 7.
